# EUROPEAN PATENT APPLICATION

(11) **EP 4 783 563 A1**
(43) Date of publication of application: **29.07.2026**
(21) Application number: 26151827.8
(22) Date of filing: 14.01.2026
(51) Int. Cl.: H04N 1/00

(54) **IMAGE PROCESSING APPARATUS CONTROL METHOD AND IMAGE PROCESSING APPARATUS**

(30) Priority: 24.01.2025 JP 2025010541
(71) Applicant: KYOCERA Document Solutions Inc., Osaka-shi, Osaka 540-8585 (JP)
(72) Inventor: Yabuuchi, Yasuyuki, Osaka-shi, 540-8585 (JP); Ogawa, Shikitaro, Osaka-shi, 540-8585 (JP); Maenishi, Junta, Osaka-shi, 540-8585 (JP)
(74) Representative: Plougmann Vingtoft a/s

(57) **Abstract**

The control device performs automatic preparation control to cause a raising and lowering mechanism to perform an operation of raising a feed tray from an evacuation position in accordance with detection of a fed-document presence state by a fed-document detection device on a normal mode. The control device shifts from a normal mode to a special mode on which the automatic preparation control is not performed and causes the raising and lowering mechanism to perform an operation of moving the feed tray to the evacuation position when a special event is detected before document conveyance is started after the raising of the feed tray according to the detection of the fed-document presence state is started. The control device shifts from the special mode to the normal mode when a return event is detected on the special mode.

## Description

### Background

The present disclosure relates to an image processing apparatus and an image processing apparatus control method.

The image processing apparatus includes a mechanism capable of raising and lowering a feed tray. The image processing apparatus control method is a method for controlling the image processing apparatus.

The image processing apparatus may include a document conveying mechanism that conveys a document from a feed tray to an output tray and an image sensor that scans an image from the conveyed document.

In addition, the image processing apparatus may include a raising and lowering mechanism that raises and lowers the feed tray. In this case, a large number of documents can be placed on the feed tray.

For example, it is known that the raising and lowering mechanism lowers the feed tray when the document is removed from the feed tray while the document conveying mechanism is operating.

### Summary

An image processing apparatus control method according to an aspect of the present disclosure is a method that controls an image processing apparatus. The image processing apparatus includes a feed tray on which a document is placed, an output tray that receives the document, a document conveying mechanism, an image sensor, a raising and lowering mechanism, and a fed-document detection device. The document conveying mechanism includes a feed roller that is brought into contact with an upper surface of the document on the feed tray and a plurality of conveying roller pairs arranged along a document conveyance path and rotates the feed roller and the plurality of conveying roller pairs, thereby conveying the document from the feed tray to the output tray via the document conveyance path. The image sensor scans an image from the document conveyed along the document conveyance path. The raising and lowering mechanism moves the feed tray between a feed position where the upper surface of the document on the feed tray is brought into contact with the feed roller and an evacuation position lower than the feed position. The fed-document detection device detects a fed-document presence state in which the document is present on the feed tray. The image processing apparatus control method includes, by a control device, performing automatic preparation control to cause the raising and lowering mechanism to perform an operation of raising the feed tray from the evacuation position in accordance with detection of the fed-document presence state by the fed-document detection device on a normal mode. The image processing apparatus control method further includes, by the control device, shifting from the normal mode to a special mode on which the automatic preparation control is not performed and causing the raising and lowering mechanism to perform an operation of holding the feed tray at a specific position lower than the feed position when a special event is detected before the document conveyance by the document conveying mechanism is started after the raising of the feed tray according to the detection of the fed-document presence state is started. The image processing apparatus control method further includes, by the control device, shifting from the special mode to the normal mode when a return event is detected on the special mode.

An image processing apparatus according to another aspect of the present disclosure includes the feed tray, the output tray, the document conveying mechanism, the image sensor, the raising and lowering mechanism, the fed-document detection device, and the control device that realizes the image processing apparatus control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. In addition, the claimed subject matter is not limited to implementations that solve any or all disadvantages noted in any part of this disclosure.

### Brief Description of Figures

Fig. 1 is a configuration view of an image processing apparatus according to an embodiment.
Fig. 2 is a block diagram showing a configuration of a control device in the image processing apparatus according to the embodiment.
Fig. 3 is a view showing peripheral parts of a raising and lowering mechanism in a feed state in the image processing apparatus according to the embodiment.
Fig. 4 is a view showing peripheral parts of the raising and lowering mechanism in a preparation state in the image processing apparatus according to the embodiment.
Fig. 5 is a view showing peripheral parts of the raising and lowering mechanism in an intermediate state in the image processing apparatus according to the embodiment.
Fig. 6 is a flowchart showing an example of a procedure of normal feed control according to the embodiment.
Fig. 7 is a flowchart showing an example of a procedure of in-conveyance control according to the embodiment.
Fig. 8 is a flowchart showing an example of a procedure of automatic preparation control according to the embodiment.
Fig. 9 is a flowchart showing an example of a procedure of automatic intermediate movement control according to the embodiment.
Fig. 10 is a flowchart showing an example of a procedure of special feed control according to the embodiment.

### Detailed Description

Hereinafter, an embodiment of the present disclosure will be described with reference to the accompanying drawings. The following embodiment is an example embodying the present disclosure and is not intended to limit the technical scope of the present disclosure.

### [Configuration of image processing apparatus 10]

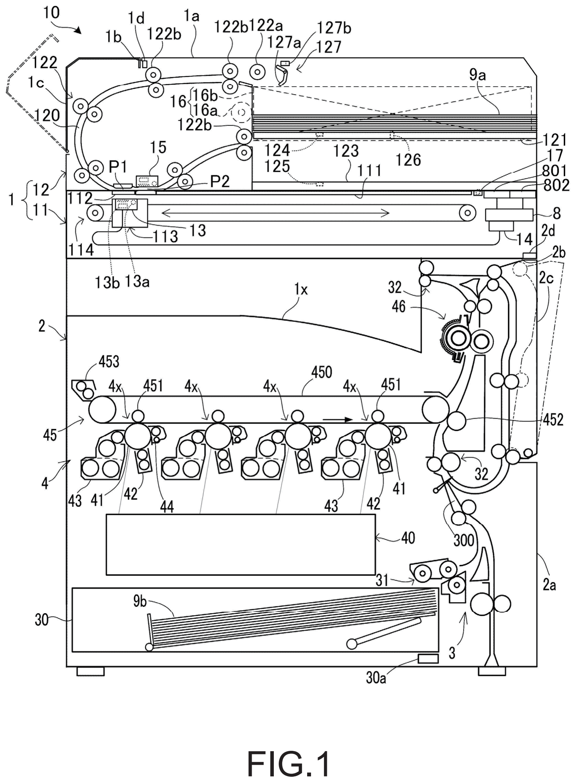

An image processing apparatus 10 according to the embodiment includes an image scanning device 1 (see Fig. 1) that conveys a document 9a and performs conveyed-document scanning processing of scanning an image from the conveyed document 9a.

In the present embodiment, the image processing apparatus 10 includes the image scanning device 1 and an image forming device 2 (see Fig. 1). The image forming device 2 conveys a sheet 9b and performs print processing of forming an image on the conveyed sheet 9b.

### [Configuration of image forming device 2]

The image forming device 2 performs print processing. The print processing is processing of forming an image on the sheet 9b.

The image forming device 2 includes a sheet cassette 30, a sheet conveying device 3, and a print device 4. The image forming device 2 further includes a first casing 2a. The first casing 2a houses the sheet cassette 30, the sheet conveying device 3, and the print device 4.

The sheet cassette 30 stores sheets 9b and is mounted to be capable of being drawn out from the first casing 2a. The sheets 9b are sheet-like image forming media, such as paper. The image forming device 2 includes a cassette detection device 30a. The cassette detection device 30a detects a cassette-mounted state in which the sheet cassette 30 is mounted on the first casing 2a. For example, a contact-type micro-switch or a contactless photosensor is employed as the cassette detection device 30a.

The sheet conveying device 3 includes a sheet feed mechanism 31. The sheet feed mechanism 31 sends each of the sheets 9b stored in the sheet cassette 30 to a sheet conveyance path 300. The sheet conveying device 3 further includes a plurality of conveying roller pairs 32. The plurality of conveying roller pairs 32 conveys the sheet 9b along the sheet conveyance path 300. One of the plurality of conveying roller pairs 32 outputs the sheet 9b to a sheet output tray 1x from the sheet conveyance path 300.

The print device 4 forms an image on the sheet 9b conveyed along the sheet conveyance path 300.

In the example shown in Fig. 1, the print device 4 forms an image on the sheet 9b by an electrophotographic method. In this case, the print device 4 includes one or more image forming parts 4x, a light scanning unit 40, a transfer device 45, and a fuser device 46.

Each of the image forming parts 4x includes a photoreceptor 41, a charging device 42, a developing device 43, and a first cleaning device 44. The charging device 42 charges a surface of the rotated photoreceptor 41. The light scanning unit 40 forms an electrostatic latent image on the surface of the photoreceptor 41 by scanning the surface of the photoreceptor 41 with a light beam.

The developing device 43 develops the electrostatic latent image formed on the surface of the photoreceptor 41 as a toner image. The first cleaning device 44 removes waste toner remaining on the surface of the photoreceptor 41.

The transfer device 45 transfers the toner image on the surface of the photoreceptor 41 to the sheet 9b conveyed along the sheet conveyance path 300. The fuser device 46 fixes the toner image on the sheet 9b to the sheet 9b by heating and pressing the toner image.

In the example shown in Fig. 1, the print device 4 includes four image forming parts 4x corresponding to four developing colors. In this case, the transfer device 45 includes an intermediate transfer belt 450, four first transfer members 451 corresponding to the four image forming parts 4x, a second transfer member 452, and a second cleaning device 453.

Each of the first transfer members 451 transfers the toner image to the surface of the intermediate transfer belt 450 from the surface of the photoreceptor 41 of each image forming part 4x. The second transfer member 452 transfers the toner image to the sheet 9b from the surface of the intermediate transfer belt 450.

The second cleaning device 453 removes waste toner remaining on the surface of the intermediate transfer belt 450.

It should be noted that the print device 4 may be a device that forms an image on the sheet 9b by a method other than the above-mentioned electrophotographic method, for example, an inkjet method.

The image forming device 2 further includes a first cover 2c and a first cover close detection device 2d. The first cover 2c is capable of opening and closing a first opening 2b formed in the first casing 2a. The first cover close detection device 2d detects a first cover-closed state. The first cover-closed state is a state in which the first cover 2c closes the first opening 2b.

For example, a contact-type micro-switch or a contactless photosensor is employed as the first cover close detection device 2d.

In the example shown in Fig. 1, when the first cover 2c is opened, the sheet conveyance path 300 is exposed to the outside of the first casing 2a.

### [Configuration of image scanning device 1]

The image scanning device 1 performs image scanning processing. The image scanning processing is processing of scanning an image from the document 9a.

The image scanning device 1 includes a scanning unit 11 and a document processing unit 12. The document processing unit 12 is rotatably coupled with the scanning unit 11.

The document processing unit 12 is movably supported between a position to cover an upper surface of the scanning unit 11 and a position to open the upper surface of the scanning unit 11.

The scanning unit 11 includes a platen glass 111, a contact glass 112, an image sensor unit 13, a carriage 113, and a carriage moving mechanism 114. The platen glass 111 and the contact glass 112 form the upper surface of the scanning unit 11.

The image sensor unit 13 includes a light-emitting section 13a and a line sensor 13b. The light-emitting section 13a emits light to the document 9a. The line sensor 13b detects an amount of light reflected on the document 9a. The carriage 113 supports the image sensor unit 13.

The carriage moving mechanism 114 moves the carriage 113 along lower surfaces of the platen glass 111 and the contact glass 112.

When the carriage moving mechanism 114 moves the carriage 113 along the lower surface of the platen glass 111, the line sensor 13b of the image sensor unit 13 scans an image from the document 9a placed on an upper surface of the platen glass 111.

The line sensor 13b is an image sensor that scans an image from the document 9a. The scanning unit 11 further includes an analog front end (AFE) 14. The AFE 14 converts an analog image signal output from the line sensor 13b into digital image data.

The document processing unit 12 includes a document conveyance path 120, a feed tray 121, a document conveying mechanism 122, and an output tray 123. The output tray 123 is arranged below the feed tray 121. The document processing unit 12 further includes a second casing 1a. The second casing 1a houses the document conveyance path 120.

One or more documents 9a are placed on the feed tray 121. The document conveying mechanism 122 includes a feed roller 122a and a plurality of conveying roller pairs 122b. The plurality of conveying roller pairs 122b is arranged along the document conveyance path 120.

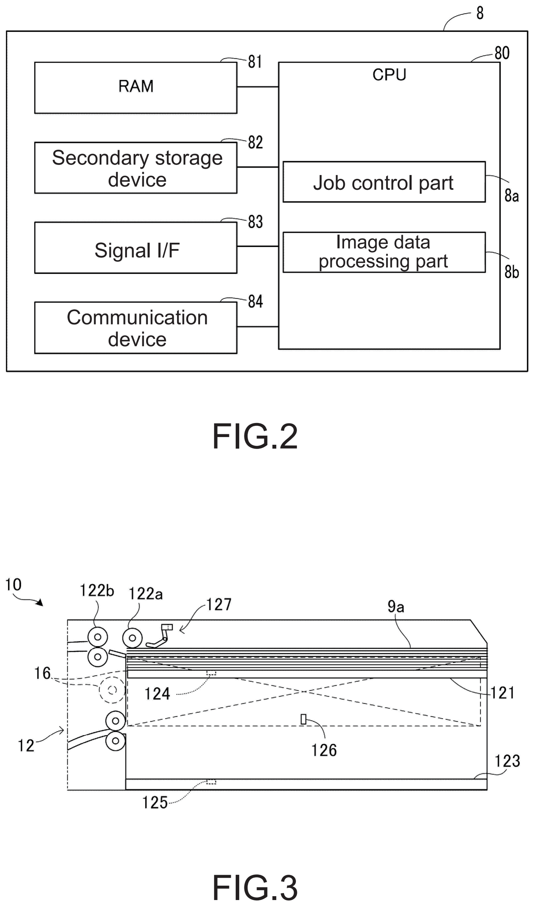

The feed roller 122a is brought into contact with an upper surface of the document 9a on the feed tray 121 (see Fig. 3). The document conveying mechanism 122 rotates the feed roller 122a and the plurality of conveying roller pairs 122b through a motor (not shown), thereby conveying the document 9a from the feed tray 121 to the output tray 123 via the document conveyance path 120.

The output tray 123 receives the document 9a output from the document conveyance path 120 through one of the plurality of conveying roller pairs 122b.

In the following description, the state in which the document processing unit 12 covers the upper surface of the scanning unit 11 will be referred to as a unit-closed state. The document conveyance path 120 is a passageway to pass through a first scanning position P1 in the unit-closed state. The first scanning position P1 is a position along an upper surface of the contact glass 112.

The image scanning device 1 includes a unit close detection device 17 that detects the unit-closed state (see Fig. 1). For example, the unit close detection device 17 is a micro-switch or a reflective photosensor that is arranged in the scanning unit 11 and detects the document processing unit 12 in the unit-closed state.

When the document conveying mechanism 122 conveys the document 9a, the carriage moving mechanism 114 holds the carriage 113 at a position to face the first scanning position P1 (see Fig. 1). Accordingly, the line sensor 13b of the image sensor unit 13 scans an image from the document 9a conveyed by the document conveying mechanism 122.

In the present embodiment, the image scanning device 1 includes an image sensor unit 15 arranged in the document processing unit 12 (see Fig. 1). The image sensor unit 15 is arranged along a second scanning position P2 in the document conveyance path 120. The image sensor unit 15 has a configuration similar to that of the image sensor unit 13.

The image sensor unit 13 scans an image from a first surface of the document 9a conveyed by the document conveying mechanism 122. The other image sensor unit 15 scans an image from a second surface of the document 9a.

The document processing unit 12 further includes a raising and lowering mechanism 16 that moves the feed tray 121 between a feed position and an evacuation position lower than the feed position (see Fig. 1). The raising and lowering mechanism 16 includes a motor 16a and a motion conversion mechanism 16b. The motion conversion mechanism 16b converts the rotational motion of the motor 16a into a raising/lowering motion of the feed tray 121.

Fig. 1 shows a state in which the feed tray 121 is located at the evacuation position. The feed position is a position of the feed tray 121 when the upper surface of the document 9a on the feed tray 121 is brought into contact with the feed roller 122a (see Fig. 3). Thus, the feed position differs depending on the number of documents 9a on the feed tray 121.

The document processing unit 12 further includes an evacuation detection device 126 and a document level detection device 127 (see Fig. 1). The evacuation detection device 126 detects that the feed tray 121 is present at the evacuation position. The document level detection device 127 detects that the upper surface of the document 9a on the feed tray 121 is present at a predetermined contact position. In other words, the document level detection device 127 detects that the feed tray 121 is present at the feed position.

For example, the evacuation detection device 126 is a contact-type micro-switch or a contactless photosensor that detects the feed tray 121 located at the evacuation position.

In the example shown in Fig. 1, the document level detection device 127 includes a swing member 127a and a swing detection sensor 127b. The swing member 127a is supported to freely swing. The swing member 127a swings by coming into contact with the upper surface of the document 9a on the feed tray 121 at the contact position. The swing detection sensor 127b detects a swing of the swing member 127a.

In addition, the document processing unit 12 includes a fed-document detection device 124 and an output-document detection device 125 (see Fig. 1). The fed-document detection device 124 detects a fed-document presence state in which the document 9a is present on the feed tray 121. The output-document detection device 125 detects an output-document presence state in which the document 9a is present on the output tray 123.

For example, each of the fed-document detection device 124 and the output-document detection device 125 is a reflective photosensor.

In addition, the document processing unit 12 includes the second casing 1a, a second cover 1c, and a second cover close detection device 1d (see Fig. 1). The second casing 1a houses the document conveying mechanism 122.

The second cover 1c is capable of opening and closing a second opening 1b formed in the second casing 1a. The second cover close detection device 1d detects a second cover-closed state. The second cover-closed state is a state in which the second cover 1c closes the second opening 1b.

For example, a contact-type micro-switch or a contactless photosensor is employed as the second cover close detection device 1d.

For example, when the second cover 1c is opened, the document conveyance path 120 is exposed to the outside of the second casing 1a.

The image processing apparatus 10 further includes a control device 8, an operation device 801, and a display device 802 (see Fig. 1).

The operation device 801 is an operation input device that detects operation inputs. For example, the operation device 801 includes one or both of a touch panel and an operation button.

The display device 802 is capable of displaying various types of information. For example, the display device 802 is a panel display device, such as a liquid-crystal display device. The control device 8 controls various electrical devices included in the image processing apparatus 10.

As shown in Fig. 2, for example, the control device 8 includes a central processing unit (CPU) 80, a random access memory (RAM) 81, a secondary storage device 82, a signal interface 83, and a communication device 84.

The CPU 80 performs various types of control and data processing by executing computer programs. The RAM 81 temporarily stores the computer programs and various types of data performed by the CPU 80.

The secondary storage device 82 is a computer-readable nonvolatile storage device. The secondary storage device 82 stores the computer programs and various types of data executed by the CPU 80. For example, one or both of a flash memory and a hard disk drive is employed as the secondary storage device 82.

The signal interface 83 converts detection signals from the various sensors into digital detection data. The detection data is transmitted to the CPU 80.

The communication device 84 communicates with a plurality of external devices including one or more host devices through a network. The CPU 80 communicates with each of the external devices through the communication device 84. The host devices are information processing apparatuses that request the above-mentioned print processing from the image processing apparatus 10.

The CPU 80 includes a plurality of processing modules, which is realized by executing the computer programs. For example, the plurality of processing modules include a job control part 8a and an image data processing part 8b (see Fig. 2).

The job control part 8a controls the image scanning device 1, the image forming device 2, and the communication device 84. The job control part 8a causes some or all of the image scanning device 1, the image forming device 2, and the communication device 84 to execute a job in accordance with an execution request of the job.

In the present embodiment, the job includes an image save job, an image send job, a copy job, and a print job.

The image save job includes the image scanning processing and processing of saving data of a scanned image obtained by the image scanning processing in the secondary storage device 82. The scanned image is an image scanned from the document 9a by the image scanning device 1.

The image send job includes the image scanning processing and processing of sending the data of the scanned image obtained by the image scanning processing to a specified destination through the communication device 84.

The copy job includes the image scanning processing and the print processing based on the data of the scanned image obtained by the image scanning processing. The print job is the image forming processing based on data of a print target image included in a print request of the host device.

The image data processing part 8b performs various types of image processing on the data of the scanned image or the data of the print target image.

By the way, the image processing apparatus 10 has a function of performing automatic preparation control to automatically raising the feed tray 121 when the fed-document presence state is detected. This allows quick start of document conveyance when an input of a processing start operation is detected.

On the other hand, operations of placing a large number of documents 9a on the feed tray 121 are performed multiple times in some cases. However, in a case where the automatic preparation control has been activated, the feed tray 121 is raised once one document placing operation is performed.

That is, the automatic preparation control prohibits the operations of placing a plurality of documents 9a on the feed tray 121 multiple times.

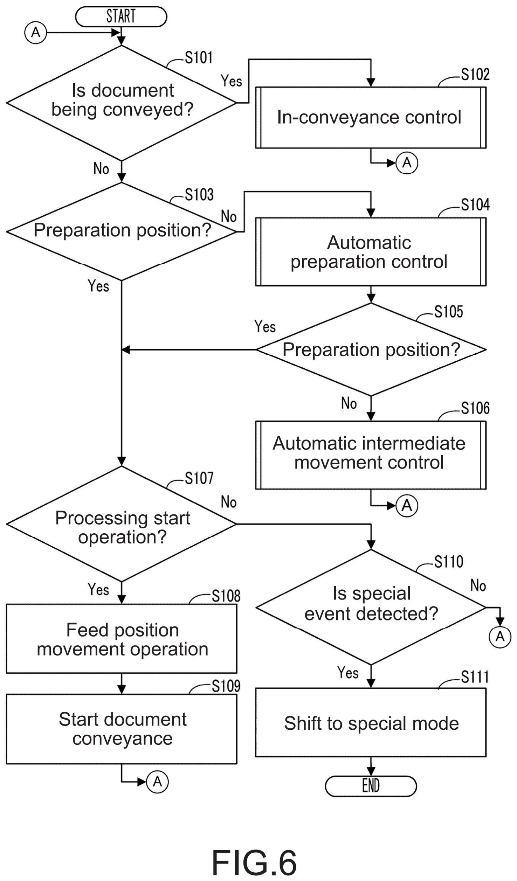

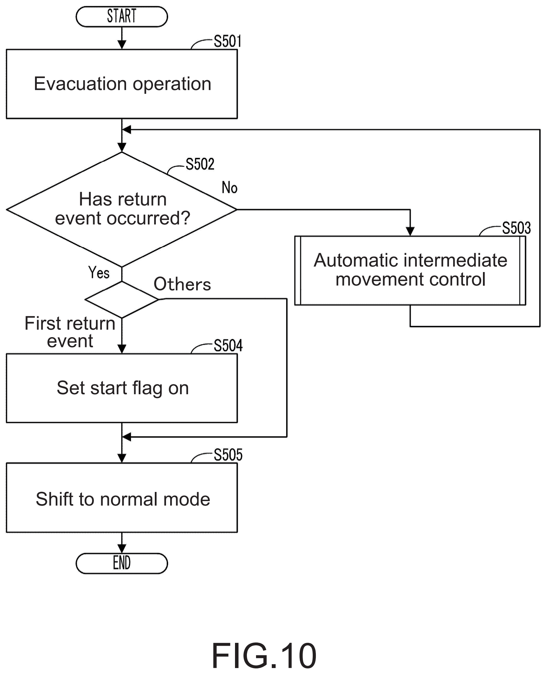

In the image processing apparatus 10, the job control part 8a performs normal feed control and special feed control to be described later (see Figs. 6 and 10). The normal feed control and the special feed control are control of the document processing unit 12.

The normal feed control and the special feed control include processing for performing both the automatic preparation control and the operations of placing the plurality of documents 9a on the feed tray 121 multiple times.

The job control part 8a performs control corresponding to either one operation mode of the normal mode and the special mode.

That is, the job control part 8a performs the normal feed control on the normal mode and performs the special feed control on the special mode. The first operation mode is the normal mode. As will be described later, the job control part 8a shifts from one of the normal mode and the special mode to the other depending on a situation.

The normal feed control and the special feed control are examples of processing of realizing an image processing apparatus control method for controlling the image processing apparatus 10. The job control part 8a that is a part of the control device 8 performs the normal feed control and the special feed control.

### [Normal feed control]

Hereinafter, an example of a procedure of the normal feed control will be described with reference to the flowchart shown in Fig. 6.

The job control part 8a starts the normal feed control when the image processing apparatus 10 is started in a situation where the operation mode is the normal mode and when the operation mode changes from the special mode to the normal mode.

In the following description, S101, S102, ... represent the identification signs of a plurality of steps in the normal feed control. In the normal feed control, first of all, the processing of Step S101 is performed.

### <Step S101 >

In Step S101, the job control part 8a selects next processing depending on whether or not the document conveying mechanism 122 is conveying a document. A state in which the document conveying mechanism 122 is operating is the state of conveying a document.

In a case where the document conveying mechanism 122 is conveying a document, the job control part 8a performs the processing of Step S102. On the other hand, in a case where the document conveying mechanism 122 is not conveying a document, the job control part 8a performs the processing of Step S103.

### <Step S102>

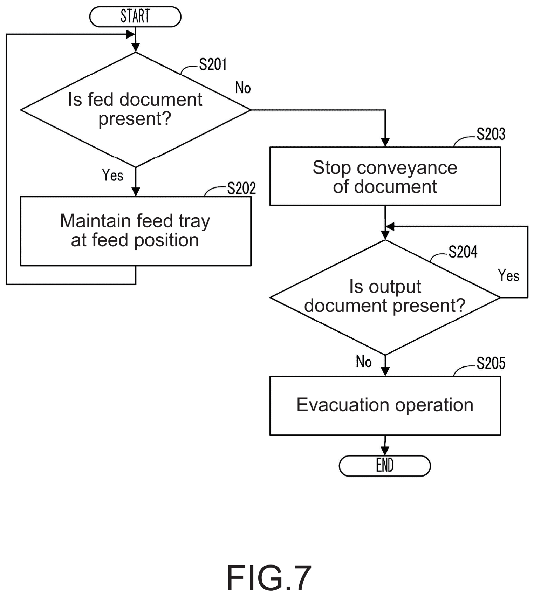

In Step S102, the job control part 8a performs the in-conveyance control to be described later (see Fig. 7). In the in-conveyance control, the job control part 8a causes the document processing unit 12 to perform processing of conveying the document 9a until the document(s) 9a on the feed tray 121 is(are) gone.

The job control part 8a performs the processing of Step S102, and then performs the processing of Step S101 and the subsequent steps.

### <Step S103>

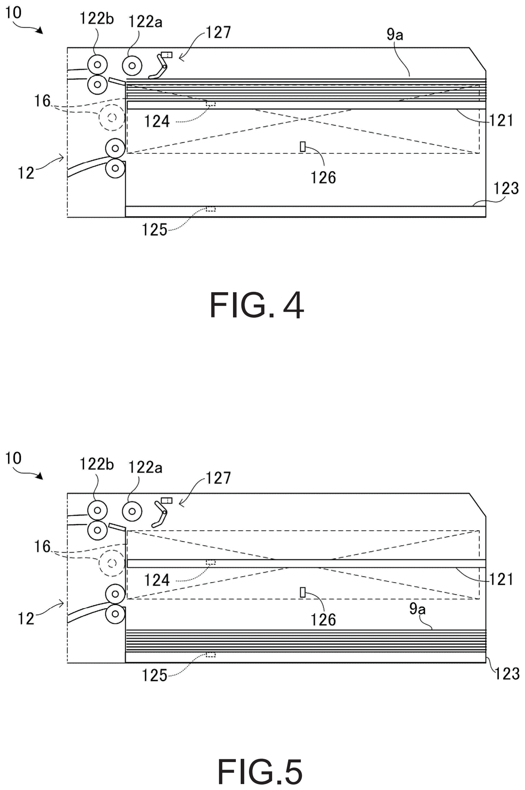

On the other hand, in Step S103, the job control part 8a selects next processing depending on whether or not the feed tray 121 is located at the preparation position. Fig. 4 shows a state in which the feed tray 121 is located at the preparation position.

The preparation position is the position of the feed tray 121 in a state in which the upper surface of the document 9a on the feed tray 121 is downwardly spaced apart from the feed roller 122a by a predetermined first distance (see Fig. 4). That is, the preparation position is a position downwardly spaced apart from the feed position by the first distance. For example, the first distance is preset within the range of approximately 1 millimeter to 5 millimeter.

The job control part 8a determines whether the feed tray 121 is located at the evacuation position or the feed position on the basis of detection results of the evacuation detection device 126 and the document level detection device 127.

In addition, the job control part 8a determines the position of the feed tray 121 other than the evacuation position and the feed position on the basis of the detection results of the evacuation detection device 126 and the document level detection device 127 and tray position data stored in the secondary storage device 82. The tray position data represents the position of the feed tray 121. The tray position data is updated in accordance with a time in which the raising and lowering mechanism 16 has operated since a point in time when the evacuation detection device 126 or the document level detection device 127 detected the document 9a.

In a case where the feed tray 121 is not located at the preparation position, the job control part 8a performs the processing of Step S104. On the other hand, in a case where the feed tray 121 is located at the preparation position, the job control part 8a performs the processing of Step S107.

### <Step S104>

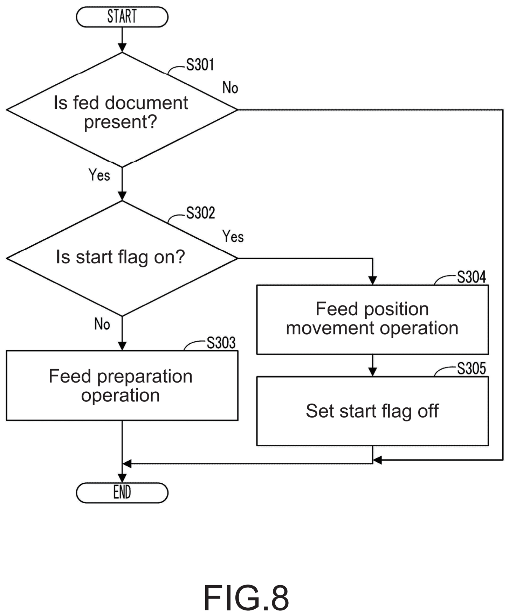

In Step S104, the job control part 8a performs the automatic preparation control (see Fig. 8). As will be described later, in the automatic preparation control, the feed tray 121 is moved to the preparation position in some cases.

The job control part 8a performs the processing of Step S104, and then performs the processing of Step S105.

### <Step S105>

In Step S105, the job control part 8a selects next processing depending on whether or not the feed tray 121 is located at the preparation position.

The job control part 8a determines whether or not the feed tray 121 is located at the preparation position on the basis of the detection results of the evacuation detection device 126 and the document level detection device 127 and the tray position data.

In a case where the feed tray 121 is not located at the preparation position, the job control part 8a performs the processing of Step S106. On the other hand, in a case where the feed tray 121 is located at the preparation position, the job control part 8a performs the processing of Step S107.

### <Step S106>

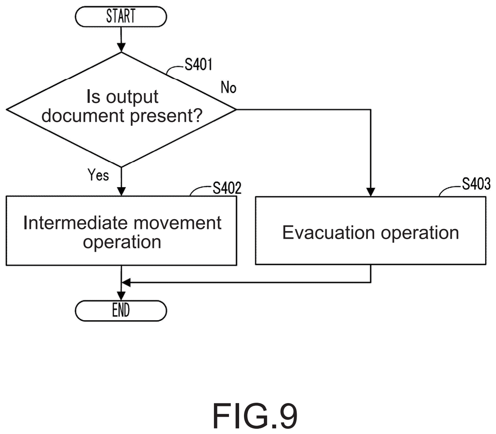

In Step S106, the job control part 8a performs automatic intermediate movement control to be described later (see Fig. 9).

The job control part 8a performs the processing of Step S106, and then performs the processing of Step S101 and the subsequent steps.

### <Step S107>

In Step S107, the job control part 8a selects next processing depending on whether or not an input of a processing start operation is detected by the operation device 801. The processing start operation is an operation of requesting to start the image scanning processing.

In a case where the input of the processing start operation is detected, the job control part 8a performs the processing of Step S108. On the other hand, in a case where the input of the processing start operation is not detected, the job control part 8a performs the processing of Step S110.

### <Step S108>

In Step S108, the job control part 8a causes the raising and lowering mechanism 16 to perform a feed position movement operation. The feed position movement operation is an operation of moving the feed tray 121 to the feed position.

Specifically, the feed position movement operation is an operation of raising the feed tray 121 until the document level detection device 127 detects the upper surface of the document 9a.

In addition, the job control part 8a updates the tray position data stored in the secondary storage device 82 to data representing the feed position. The job control part 8a performs the processing of Step S108, and then performs the processing of Step S109.

It should be noted that in a case where the feed tray 121 is already located at the feed position at a point in time when the processing of Step S108 is started, the processing of Step S108 is skipped. The job control part 8a determines whether or not the feed tray 121 is located at the feed position on the basis of the detection result of the document level detection device 127.

### <Step S109>

In Step S109, the job control part 8a causes the document conveying mechanism 122 to start document conveying processing. The document conveying processing is processing of conveying the document 9a from the feed tray 121 to the output tray 123 via the document conveyance path 120.

The job control part 8a performs the processing of Step S109, and then performs the processing of Step S101 and the subsequent steps.

### <Step S110>

In Step S110, the job control part 8a selects next processing depending on whether or not a special event is detected. For example, the special event includes one or both of a first special event and a second special event.

The first special event is an event that a state in which the fed-document presence state is detected by the fed-document detection device 124 changes to a state in which the fed-document presence state is not detected by the fed-document detection device 124.

The second special event is an event that a state in which the output-document presence state is not detected by the output-document detection device 125 changes to a state in which the output-document presence state is detected by the output-document detection device 125.

In a case where the special event is not detected, the job control part 8a performs the processing of Step S101 and the subsequent steps. On the other hand, in a case where the special event is detected, the job control part 8a performs the processing of Step S111.

In a case where the special event includes both the first special event and the second special event, the job control part 8a performs the processing of Step S111 when at least one of the first special event and the second special event is detected.

### <Step S111>

In Step S111, the job control part 8a shifts from the normal mode to the special mode and terminates the normal feed control. Accordingly, the job control part 8a starts the special feed control (see Fig. 10).

### [In-conveyance control]

Next, an example of a procedure of the in-conveyance control will be described with reference to the flowchart shown in Fig. 7.

In the following description, S201, S202, ... represent the identification signs of a plurality of steps in the in-conveyance control. In the in-conveyance control, first of all, the processing of Step S201 is performed.

### <Step S201>

In Step S201, the job control part 8a selects processing depending on whether or not the fed-document presence state has been detected by the fed-document detection device 124.

In a case where the fed-document presence state has been detected, the job control part 8a performs the processing of Step S202. On the other hand, in a case where the fed-document presence state has not been detected, the job control part 8a performs the processing of Step S203.

### <Step S202>

In Step S202, the job control part 8a causes the raising and lowering mechanism 16 to perform an operation of maintaining the feed tray 121 at the feed position.

For example, every time one document 9a is sent out from the feed tray 121, the job control part 8a causes the raising and lowering mechanism 16 to perform an operation of raising the feed tray 121 by a unit time corresponding to the thickness of the document 9a.

The job control part 8a performs the processing of Step S202, and then performs the processing of Step S201.

### <Step S203>

On the other hand, in Step S203, the job control part 8a stops the conveyance of the document 9a by the document conveying mechanism 122 when a time required to output the last document 9a on the feed tray 121 to the output tray 123 has elapsed.

The job control part 8a performs the processing of Step S203, and then performs the processing of Step S204.

### <Step S204>

In Step S204, the job control part 8a monitors the detection result of the output-document detection device 125 until the output-document presence state is not detected by the output-document detection device 125.

The job control part 8a performs the processing of Step S205 when the output-document presence state is not detected.

### <Step S205>

In Step S205, the job control part 8a causes the raising and lowering mechanism 16 to perform an evacuation operation. The evacuation operation is an operation of holding the feed tray 121 at the evacuation position. In a case where the feed tray 121 is not present at the evacuation position at a point in time when the processing of Step S205 is performed, the evacuation operation includes an operation of moving the feed tray 121 to the evacuation position.

Specifically, the job control part 8a causes the raising and lowering mechanism 16 to perform an operation of holding the position of the feed tray 121 after the feed tray 121 is lowered until the feed tray 121 is detected by the evacuation detection device 126.

In addition, the job control part 8a updates the tray position data stored in the secondary storage device 82 to data representing the evacuation position. After the job control part 8a performs the processing of Step S205, the job control part 8a terminates the in-conveyance control.

It should be noted that in a case where the feed tray 121 is already located at the evacuation position at a point in time when the processing of Step S205 is started, the processing of Step S205 is skipped. The job control part 8a determines whether or not the feed tray 121 is located at the evacuation position on the basis of the detection result of the evacuation detection device 126.

### [Automatic preparation control]

Next, an example of a procedure of the automatic preparation control will be described with reference to the flowchart shown in Fig. 8.

In the following description, S301 and S302 represent identification signs of two steps in the automatic preparation control. In the automatic preparation control, first of all, the processing of Step S301 is performed.

### <Step S301>

In Step S301, the job control part 8a selects processing depending on whether or not the fed-document presence state is detected by the fed-document detection device 124.

In a case where the fed-document presence state is detected, the job control part 8a performs the processing of Step S302. On the other hand, in a case where the fed-document presence state is not detected, the job control part 8a terminates the automatic preparation control.

### <Step S302>

In Step S302, the job control part 8a selects next processing depending on whether a start flag is on or off.

As will be described later, the start flag is a flag representing that a shift from the special mode to the normal mode is made by detecting the input of the processing start operation (see Fig. 10).

The job control part 8a selects next processing depending on whether the start flag is on or off.

In a case where the start flag is off, the job control part 8a performs the processing of Step S303. In a case where the start flag is on, the job control part 8a performs the processing of Step S304.

### <Step S303>

In Step S303, the job control part 8a causes the raising and lowering mechanism 16 to perform a feed preparation operation. The feed preparation operation is an operation of moving the feed tray 121 to the preparation position.

Specifically, the feed preparation operation is an operation of raising the feed tray 121 until the document level detection device 127 detects the upper surface of the document 9a and then lowering the feed tray 121 for a first prescribed time. The first prescribed time is a time required to lower the feed tray 121 by the first distance.

In addition, the job control part 8a updates the tray position data stored in the secondary storage device 82 to data representing the preparation position. After the job control part 8a performs the processing of Step S303, the job control part 8a terminates the automatic preparation control.

It should be noted that in a case where the feed tray 121 is already located at the preparation position at a point in time when the processing of Step S303 is started, the processing of Step S303 is skipped. The job control part 8a determines whether or not the feed tray 121 is located at the preparation position on the basis of the detection results of the evacuation detection device 126 and the document level detection device 127 and the tray position data.

### <Step S304>

On the other hand, in Step S304, the job control part 8a causes the raising and lowering mechanism 16 to perform the feed position movement operation as in Step S108. Further, the job control part 8a updates the tray position data stored in the secondary storage device 82 to data representing the feed position.

It should be noted that in a case where the feed tray 121 is already located at the feed position at a point in time when the processing of Step S304 is started, the processing of Step S304 is skipped. The job control part 8a determines whether or not the feed tray 121 is located at the feed position on the basis of the detection result of the document level detection device 127.

The job control part 8a performs the processing of Step S304, and then performs the processing of Step S305.

### <Step S305>

On the other hand, in Step S305, the job control part 8a sets the start flag off and terminates the automatic preparation control.

### [Automatic intermediate movement control]

Next, an example of a procedure of the automatic intermediate movement control will be described with reference to the flowchart shown in Fig. 9.

In the following description, S401 and S402 represent identification signs of a plurality of steps in the automatic intermediate movement control. In the automatic intermediate movement control, first of all, the processing of Step S401 is performed.

### <Step S401>

In Step S401, the job control part 8a selects processing depending on whether or not the output-document presence state is detected by the output-document detection device 125.

In a case where the output-document presence state is detected, the job control part 8a performs the processing of Step S402. On the other hand, in a case where the output-document presence state is not detected, the job control part 8a performs the processing of Step S403.

### <Step S402>

In Step S402, the job control part 8a causes the raising and lowering mechanism 16 to perform an intermediate movement operation. The intermediate movement operation is an operation of moving the feed tray 121 to an intermediate position upwardly spaced apart from the evacuation position by a predetermined distance.

The intermediate position is a position between the evacuation position and the preparation position. In other words, the intermediate position is a position higher than the evacuation position and lower than the preparation position.

In addition, the job control part 8a updates the tray position data stored in the secondary storage device 82 to data representing the intermediate position. After the job control part 8a performs the processing of Step S402, the job control part 8a terminates the automatic intermediate movement control.

It should be noted that in a case where the feed tray 121 is already located at the intermediate position at a point in time when the processing of Step S402 is started, the processing of Step S402 is skipped. The job control part 8a determines whether or not the feed tray 121 is located at the intermediate position on the basis of the detection results of the evacuation detection device 126 and the document level detection device 127 and the tray position data.

### <Step S403>

On the other hand, in Step S403, the job control part 8a causes the raising and lowering mechanism 16 to perform the evacuation operation as in Step S205.

After the job control part 8a performs the processing of Step S403, the job control part 8a terminates the automatic intermediate movement control.

The automatic intermediate movement control is performed for temporarily extending a space above the output tray 123 when a set of documents is temporarily placed on the output tray 123.

### [Special feed control]

Next, an example of a procedure of the special feed control will be described with reference to the flowchart shown in Fig. 10.

The job control part 8a starts the special feed control when the operation mode changes from the normal mode to the special mode or when the image processing apparatus 10 is started in a situation where the operation mode is the special mode.

In the following description, S501, S502, ... represent identification signs of a plurality of steps in the special feed control. In the special feed control, first of all, the processing of Step S501 is performed.

### <Step S501>

In Step S501, the job control part 8a causes the raising and lowering mechanism 16 to perform the evacuation operation. Further, the job control part 8a updates the tray position data stored in the secondary storage device 82 to the data representing the evacuation position.

It should be noted that in a case where the feed tray 121 is already located at the evacuation position at a point in time when the processing of Step S501 is started, the processing of Step S501 is skipped. The job control part 8a determines whether or not the feed tray 121 is located at the evacuation position on the basis of the detection result of the evacuation detection device 126.

By the processing of Step S501, the feed tray 121 is held at the evacuation position. The evacuation position in Step S501 is an example of a specific position lower than the feed position.

The job control part 8a performs the processing of Step S501, and then performs the processing of Step S502.

### <Step S502>

In Step S502, the job control part 8a selects next processing depending on whether or not the return event is detected. The return event is an event that is a condition for a shift from the special mode to the normal mode.

The return event includes a first return event that the input of the processing start operation is detected by the operation device 801.

In addition, the return event may include one or more of a second return event, a third return event, and a fourth return event.

The second return event is an event that a state in which the unit-closed state is not detected by the unit close detection device 17 changes to a state in which the unit-closed state is detected by the unit close detection device 17.

The third return event includes one or both of a first cover close event and a second cover close event.

The first cover close event is an event that a state in which the first cover-closed state is not detected by the first cover close detection device 2d changes to a state in which the first cover-closed state is detected by the first cover close detection device 2d. The second cover close event is an event that a state in which the second cover-closed state is not detected by the second cover close detection device 1d to a state in which the second cover-closed state is detected by the second cover close detection device 1d.

The fourth return event is an event that a state in which the above-mentioned cassette-mounted state is not detected by the cassette detection device 30a changes to the cassette-mounted state is detected by the cassette detection device 30a.

The return event is an event representing that an operation other than the operation related to the placement of the set of documents on the feed tray 121 has been performed.

In a case where the return event is not detected, the job control part 8a performs the processing of Step S503.

On the other hand, the job control part 8a performs the processing of Step S504 or Step S505 when the return event is detected. Specifically, the job control part 8a performs the processing of Step S504 when the first return event is detected. On the other hand, the job control part 8a performs the processing of Step S505 when the return event other than the first return event is detected.

### <Step S503>

In Step S503, the job control part 8a performs the automatic intermediate movement control (see Fig. 9).

The job control part 8a performs the processing of Step S503, and then performs the processing of Step S502 and the subsequent steps.

### <Step S504>

On the other hand, in S504, the job control part 8a sets the start flag on. As described above, the start flag is a flag that is referenced in Step S302 of the automatic preparation control (see Fig. 8).

The job control part 8a performs the processing of Step S504, and then performs the processing of Step S505.

### <Step S505>

In Step S505, the job control part 8a shifts from the special mode to the normal mode and terminates the special feed control. Accordingly, the job control part 8a starts the normal feed control (see Fig. 6).

In a case where a shift from the special mode to the normal mode is performed in accordance with the first return event, in Step S304 of the automatic preparation control, the feed tray 121 is moved to the feed position (see Fig. 8).

On the other hand, in a case where a shift from the special mode to the normal mode is performed in accordance with the return event different from the first return event, in Step S303 of the automatic preparation control, the feed tray 121 is moved to the preparation position (see Fig. 8).

As shown above, the job control part 8a performs the automatic preparation control on the normal mode (see Step S104 in Fig. 6 and Fig. 9).

In the automatic preparation control, the job control part 8a causes the raising and lowering mechanism 16 to perform the preparation operation of raising the feed tray 121 from the evacuation position to the preparation position in accordance with detection of the fed-document presence state by the fed-document detection device 124 (see Step S401 to S402 in Fig. 9).

In addition, the job control part 8a performs the automatic intermediate movement control on each of the normal mode and the special mode (see Step S106 in Fig. 6, Step S503 in Fig. 10, and Fig. 9). In the automatic intermediate movement control, the job control part 8a causes the raising and lowering mechanism 16 to perform the intermediate movement operation in accordance with the detection of the output-document presence state by the output-document detection device 125 in a situation where the feed tray 121 is located at the evacuation position (see Step S401 to S402 in Fig. 9).

In addition, the job control part 8a shifts from the normal mode to the special mode and performs the special feed control when the special event is detected before the document conveyance by the document conveying mechanism 122 is started after raising of the feed tray 121 according to the detection of the fed-document presence state is started (see Step S110 to S111 in Fig. 6 and Fig. 10).

The start of the feed preparation operation in the automatic preparation control is an example of the start of the raising of the feed tray 121 according to the detection of the fed-document presence state.

The special mode is the operation mode on which the automatic preparation control is not performed. In other words, the special mode is the operation mode to disable control to cause the raising and lowering mechanism 16 to perform an operation of raising the feed tray 121 from the evacuation position in accordance with the detection of the fed-document presence state by the fed-document detection device 124.

On the special feed control, the job control part 8a causes the raising and lowering mechanism 16 to perform the evacuation operation of moving the feed tray 121 to the evacuation position (see Step S501 in Fig. 10).

On the special mode, until the return event is detected after the evacuation operation by the raising and lowering mechanism 16 is performed, the automatic preparation control is not performed and the feed tray 121 is held at the evacuation position.

Therefore, since the operation corresponding to the special event is performed on the normal mode on which the automatic preparation control is performed, the operations of placing the plurality of documents 9a on the feed tray 121 multiple times are possible until the operation corresponding to the return event is performed.

In addition, the job control part 8a shifts from the special mode to the normal mode when a return event is detected on the special mode (see Step S502 to S504 in Fig. 10).

The return event is an event corresponding to an operation not related to the placement of the document 9a on the feed tray 121. In other words, the return event is an event representing that the placement of the document 9a on the feed tray 121 ends.

The job control part 8a performs the automatic preparation control until the feed tray 121 is moved to the preparation position by shifting from the special mode to the normal mode (see Step S103 to S106).

That is, the job control part 8a enables the control to cause the raising and lowering mechanism 16 to perform the operation of raising the feed tray 121 from the evacuation position in accordance with the detection of the fed-document presence state by the fed-document detection device 124 after shifting from the special mode to the normal mode.

Owing to the image processing apparatus 10 employed, it is possible to perform both the automatic preparation control and the divided placement operation of placing the plurality of documents 9a on the feed tray 121 multiple times. In the present embodiment, it is possible to perform both the automatic preparation control and automatic intermediate movement control and the divided placement operation.

### [First modified example]

The return event may include a fifth return event. The fifth return event is a start event that the start is performed from a power stopped state or power saving state to the normal power state.

The power saving state is a state in which the power supplied to some devices in the image processing apparatus 10 is stopped and the power consumption is lower than in the normal power state.

Moreover, in each of the normal feed control and the special feed control, the automatic intermediate movement control may be omitted.

Also in a case where this modified example is employed, effects similar to those in a case where the image processing apparatus 10 is employed are obtained.

### [Second modified example]

In Step S501 in the special feed control, the job control part 8a may cause the raising and lowering mechanism 16 to perform a specific operation of holding the feed tray 121 at a specific position lower than the feed position. In this modified example, the specific position is a position between the evacuation position and the feed position.

In the following description, a region of the movable region of the feed tray 121, which ranges from the evacuation position to a prescribed position between the evacuation position and the feed position will be referred to as a specific region. For example, the prescribed position is a position between the evacuation position and the preparation position.

Moreover, a case where the special event is detected in a situation where the feed tray 121 is located in the specific region after the raising of the feed tray 121 according to the detection of the fed-document presence state is started will be referred to as a first case.

On the other hand, a case where the special event is detected in a situation where the feed tray 121 is located above than the specific region after the raising of the feed tray 121 according to the detection of the fed-document presence state is started will be referred to as a second case.

In the first case, the specific operation is an operation of holding the feed tray 121 at a position where the special event is detected. In the first case, the position of the feed tray 121 when the special event is detected is the specific position.

On the other hand, in the second case, the specific operation is an operation of holding the feed tray 121 at a predetermined reference position within the specific region. For example, the reference position is the prescribed position that is an upper limit position of the specific region.

### [Notes of disclosure]

The outline of the disclosure extracted from the above-mentioned embodiments will be given below. Note that the configurations and processing functions described in the following notes can be arbitrarily selected and combined.

### <Note 1>

An image processing apparatus control method for controlling an image processing apparatus including
a feed tray on which a document is placed,
an output tray that receives the document,
a document conveying mechanism that includes a feed roller that is brought into contact with an upper surface of the document on the feed tray and a plurality of conveying roller pairs arranged along a document conveyance path and rotates the feed roller and the plurality of conveying roller pairs, thereby conveying the document from the feed tray to the output tray via the document conveyance path,
an image sensor that scans an image from the document conveyed along the document conveyance path,
a raising and lowering mechanism that moves the feed tray between a feed position where the upper surface of the document on the feed tray is brought into contact with the feed roller and an evacuation position lower than the feed position, and
a fed-document detection device that detects a fed-document presence state in which the document is present on the feed tray, the image processing apparatus control method including:
   by a control device, performing automatic preparation control to cause the raising and lowering mechanism to perform an operation of raising the feed tray from the evacuation position in accordance with detection of the fed-document presence state by the fed-document detection device on a normal mode;
   by the control device, shifting from the normal mode to a special mode on which the automatic preparation control is not performed and causing the raising and lowering mechanism to perform an operation of holding the feed tray at a specific position lower than the feed position when a special event is detected before the document conveyance by the document conveying mechanism is started after the raising of the feed tray according to the detection of the fed-document presence state is started; and
   by the control device, shifting from the special mode to the normal mode when a return event is detected on the special mode.

### <Note 2>

The image processing apparatus control method according to Note 1, in which
the special event includes a first special event that a state in which the fed-document presence state is detected by the fed-document detection device changes to a state in which the fed-document presence state is not detected by the fed-document detection device.

### <Note 3>

The image processing apparatus control method according to Note 1 or 2, in which
the image processing apparatus further includes an output-document detection device that detects an output-document presence state in which the document is present on the output tray, and
the special event includes a second special event that a state in which the output-document presence state is not detected by the output-document detection device changes to a state in which the output-document presence state is detected by the output-document detection device.

### <Note 4>

The image processing apparatus control method according to any one of Notes 1 to 3, in which
the image processing apparatus further includes an operation input device that detects an operation input, and
the return event includes a first return event that an input of a processing start operation is detected by the operation input device.

### <Note 5>

The image processing apparatus control method according to any one of Notes 1 to 4, in which
the output tray is arranged below the feed tray,
the image processing apparatus further includes an output-document detection device that detects an output-document presence state in which the document is present on the output tray, the image processing apparatus control method further including
by the control device, performing automatic intermediate movement control to cause the raising and lowering mechanism to perform an intermediate movement operation of moving the feed tray to an intermediate position upwardly spaced apart by a predetermined distance from the evacuation position in accordance with the detection of the output-document presence state by the output-document detection device in a situation where the feed tray is located at the evacuation position on each of the normal mode and the special mode.

### <Note 6>

The image processing apparatus control method according to any one of Notes 1 to 5, in which
the image processing apparatus further includes
   a scanning unit including the image sensor,
   a document processing unit that includes the feed tray, the output tray, and the document conveying mechanism and is supported to be movable between a position to cover an upper surface of the scanning unit and a position to open the upper surface of the scanning unit, and
   a unit close detection device that detects a unit-closed state in which the document processing unit covers the upper surface of the scanning unit, and
the return event includes a second return event that a state in which the unit-closed state is not detected by the unit close detection device changes to a state in which the unit-closed state is detected by the unit close detection device.

### <Note 7>

The image processing apparatus control method according to any one of Notes 1 to 6, in which
the image processing apparatus further includes
   a casing that houses a device,
   a cover capable of opening and closing an opening formed in the casing, and
   a cover close detection device that detects a cover-closed state in which the cover closes the opening, and
the return event includes a third return event that a state in which the cover-closed state is not detected by the cover close detection device changes to a state in which the cover-closed state is detected by the cover close detection device.

### <Note 8>

The image processing apparatus control method according to any one of Notes 1 to 7, in which
the specific position is the evacuation position or a position between the evacuation position and the feed position.

### <Note 9>

The image processing apparatus control method according to any one of Notes 1 to 7, in which
in a case where the special event is detected in a situation where the feed tray is located in a specific region from the evacuation position to a prescribed position between the evacuation position and the feed position after the raising of the feed tray according to the detection of the fed-document presence state is started, the specific position is a position of the feed tray when the special event is detected.

### <Note 10>

The image processing apparatus control method according to Note 9, in which
in a case where the special event is detected in a situation where the feed tray is located above the specific region after the raising of the feed tray according to the detection of the fed-document presence state is started, the specific position is a predetermined position within the specific region.

### <Note 11>

An image processing apparatus, including:
a feed tray on which a document is placed;
an output tray that receives the document;
a document conveying mechanism that includes a feed roller that is brought into contact with an upper surface of the document on the feed tray and a plurality of conveying roller pairs arranged along a document conveyance path and rotates the feed roller and the plurality of conveying roller pairs, thereby conveying the document from the feed tray to the output tray via the document conveyance path;
an image sensor that scans an image from the document conveyed along the document conveyance path;
a raising and lowering mechanism that moves the feed tray between a feed position where the upper surface of the document on the feed tray is brought into contact with the feed roller and an evacuation position lower than the feed position;
a fed-document detection device that detects a fed-document presence state in which the document is present on the feed tray; and
a control device that realizes the image processing apparatus control method according to any one of Notes 1 to 7.

It is to be understood that the embodiments herein are illustrative and not restrictive, since the scope of the disclosure is defined by the appended claims.

## Claims

1. An image processing apparatus control method for controlling an image processing apparatus (10) including
a feed tray (121) on which a document is placed,
an output tray (123) that receives the document,
a document conveying mechanism (122) that includes a feed roller (122a) that is brought into contact with an upper surface of the document on the feed tray (121) and a plurality of conveying roller pairs (122b) arranged along a document conveyance path (120) and rotates the feed roller (122a) and the plurality of conveying roller pairs (122b), thereby conveying the document from the feed tray (121) to the output tray (123) via the document conveyance path (120),
an image sensor (13b) that scans an image from the document conveyed along the document conveyance path (120),
a raising and lowering mechanism (16) that moves the feed tray (121) between a feed position where the upper surface of the document on the feed tray (121) is brought into contact with the feed roller (122a) and an evacuation position lower than the feed position, and
a fed-document detection device (124) that detects a fed-document presence state in which the document is present on the feed tray (121), the image processing apparatus control method comprising:
by a control device (8), performing automatic preparation control to cause the raising and lowering mechanism (16) to perform an operation of raising the feed tray (121) from the evacuation position in accordance with detection of the fed-document presence state by the fed-document detection device (124) on a normal mode;
by the control device (8), shifting from the normal mode to a special mode on which the automatic preparation control is not performed and causing the raising and lowering mechanism (16) to perform an operation of holding the feed tray (121) at a specific position lower than the feed position when a special event is detected before the document conveyance by the document conveying mechanism (122) is started after the raising of the feed tray (121) according to the detection of the fed-document presence state is started; and
by the control device (8), shifting from the special mode to the normal mode when a return event is detected on the special mode.

2. The image processing apparatus control method according to claim 1, wherein
the special event includes a first special event that a state in which the fed-document presence state is detected by the fed-document detection device (124) changes to a state in which the fed-document presence state is not detected by the fed-document detection device (124).

3. The image processing apparatus control method according to claim 1 or 2, wherein
the image processing apparatus (10) further includes an output-document detection device (125) that detects an output-document presence state in which the document is present on the output tray (123), and
the special event includes a second special event that a state in which the output-document presence state is not detected by the output-document detection device (125) changes to a state in which the output-document presence state is detected by the output-document detection device (125).

4. The image processing apparatus control method according to any one of claims 1 to 3, wherein
the image processing apparatus (10) further includes an operation input device (801) that detects an operation input, and
the return event includes a first return event that an input of a processing start operation is detected by the operation input device (801).

5. The image processing apparatus control method according to any one of claims 1 to 4, wherein
the output tray (123) is arranged below the feed tray (121),
the image processing apparatus (10) further includes an output-document detection device (125) that detects an output-document presence state in which the document is present on the output tray (123), the image processing apparatus control method further comprising
by the control device (8), performing automatic intermediate movement control to cause the raising and lowering mechanism (16) to perform an intermediate movement operation of moving the feed tray (121) to an intermediate position upwardly spaced apart by a predetermined distance from the evacuation position in accordance with the detection of the output-document presence state by the output-document detection device (125) in a situation where the feed tray (121) is located at the evacuation position on each of the normal mode and the special mode.

6. The image processing apparatus control method according to any one of claims 1 to 5, wherein
the image processing apparatus (10) further includes
a scanning unit (11) including the image sensor (13b),
a document processing unit (12) that includes the feed tray (121), the output tray (123), and the document conveying mechanism (122) and is supported to be movable between a position to cover an upper surface of the scanning unit (11) and a position to open the upper surface of the scanning unit (11), and
a unit close detection device (17) that detects a unit-closed state in which the document processing unit (12) covers the upper surface of the scanning unit (11), and
the return event includes a second return event that a state in which the unit-closed state is not detected by the unit close detection device (17) changes to a state in which the unit-closed state is detected by the unit close detection device (17).

7. The image processing apparatus control method according to any one of claims 1 to 6, wherein
the image processing apparatus (10) further includes
a casing (2a) that houses a device,
a cover (2c) capable of opening and closing an opening formed in the casing (2a), and
a cover close detection device (2d) that detects a cover-closed state in which the cover (2c) closes the opening, and
the return event includes a third return event that a state in which the cover-closed state is not detected by the cover close detection device (2d) changes to a state in which the cover-closed state is detected by the cover close detection device (2d).

8. The image processing apparatus control method according to any one of claims 1 to 7, wherein
the specific position is the evacuation position or a position between the evacuation position and the feed position.

9. The image processing apparatus control method according to any one of claims 1 to 7, wherein
in a case where the special event is detected in a situation where the feed tray (121) is located in a specific region from the evacuation position to a prescribed position between the evacuation position and the feed position after the raising of the feed tray (121) according to the detection of the fed-document presence state is started, the specific position is a position of the feed tray (121) when the special event is detected.

10. The image processing apparatus control method according to claim 9, wherein
in a case where the special event is detected in a situation where the feed tray (121) is located above the specific region after the raising of the feed tray (121) according to the detection of the fed-document presence state is started, the specific position is a predetermined position within the specific region.

11. An image processing apparatus (10), comprising:
a feed tray (121) on which a document is placed;
an output tray (123) that receives the document;
a document conveying mechanism (122) that includes a feed roller (122a) that is brought into contact with an upper surface of the document on the feed tray (121) and a plurality of conveying roller pairs (122b) arranged along a document conveyance path (120) and rotates the feed roller (122a) and the plurality of conveying roller pairs (122b), thereby conveying the document from the feed tray (121) to the output tray (123) via the document conveyance path (120);
an image sensor (13b) that scans an image from the document conveyed along the document conveyance path (120);
a raising and lowering mechanism (16) that moves the feed tray (121) between a feed position where the upper surface of the document on the feed tray (121) is brought into contact with the feed roller (122a) and an evacuation position lower than the feed position;
a fed-document detection device (124) that detects a fed-document presence state in which the document is present on the feed tray (121); and
a control device (8) that realizes the image processing apparatus control method according to any one of claims 1 to 7.
